Europäisches Patentamt

European Patent Office

Office européen des brevets

(19)

(11) Veröffentlichungsnummer : **0 114 241**
**B1**

(12)  # EUROPÄISCHE PATENTSCHRIFT

(45) Veröffentlichungstag der Patentschrift :
11.01.89

(51) Int. Cl.⁴ : **F 24 F   7/08**

(21) Anmeldenummer : 83111592.8

(22) Anmeldetag : 19.11.83

(54) **Lüftungsvorrichtung.**

(30) Priorität : 22.01.83 DE 8301708 U

(43) Veröffentlichungstag der Anmeldung :
01.08.84 Patentblatt 84/31

(45) Bekanntmachung des Hinweises auf die Patenterteilung : 11.01.89 Patentblatt 89/02

(84) Benannte Vertragsstaaten :
AT BE CH DE FR GB LI NL

(56) Entgegenhaltungen :
EP-A- 0 014 863
EP-A- 0 074 486
DE-A- 2 628 026
DE-A- 3 006 318
DE-A- 3 006 318
DE-A- 3 111 360
FR-A- 2 370 238

(73) Patentinhaber : Gretsch-Unitas GmbH Baubeschläge
Johann-Maus-Strasse 3 Postfach 1120
D-7257 Ditzingen (DE)

(72) Erfinder : Maus von Resch, Julius
Gaussstrasse 111
D-7000 Stuttgart 1 (DE)

(74) Vertreter : Schmid, Berthold et al
Patentanwälte Dipl.-Ing. B. Schmid Dr. Ing. G. Birn
Dipl.-Phys. H. Quarder Falbenhennenstrasse 17
D-7000 Stuttgart 1 (DE)

**Beschreibung**

Die Erfindung bezieht sich auf eine Lüftungsvorrichtung mit einem Zuluft- und einem Abluftkanal sowie einem dem Zuluft- und dem Abluftstrom ausgesetzten, zwischen zwei Teilstücke einer gemeinsamen Längswand des Zuluft- und Abluftkanals dichtend eingesetzten Wärmetauschers und einem Gebläse, wobei der Zuluft- und der Abluftstrom im Wärmetauscher in Teilströme unterteilt sind und jeweils ein Teilstrom der Zuluft von einem Teilstrom der Abluft durch eine wärmeleitende Platte getrennt ist, wobei ferner die in Längsrichtung der gemeinsamen Längswand verlaufenden Längsränder der Platten durch jeweils eine Platte überdeckt sind und am einen Ende des Wärmetauschers die Zuströmöffnungen sowohl für die Zuluft- als auch die Abluftteilströme und am gegenüberliegenden Ende die Abströmöffnungen für die Zuluft- und Abluftteilströme gelegen und die Zu- und Abströmöffnungen der Zuluft einerseits sowie die Zu- und Abströmöffnungen der Abluft andererseits jeweils in etwa parallelen, durch die Platten gebildeten Ebenen angeordnet sind. Eine derartige Lüftungsvorrichtung ist durch die DE-A-3 006 318 bekannt geworden. Solche Lüftungsvorrichtungen werden vielfach in der Nähe eines Fensters oder einer Tür angebracht. Es gibt auch Fensterrahmen, die bereits eine Einsecköffnung für eine solche Lüftungsvorrichtung haben. Dabei erstreckt sich die Lüftungsvorrichtung beispielsweise über die gesamte Breite des Flügels. Man kann mit Hilfe dieser Lüftungsvorrichtungen bei geschlossenem Fenster oder geschlossener Tür den Raum wirkungsvoll be- und entlüften. Während der kalten Jahreszeit tritt jedoch über die Lüftungsvorrichtung mit der Luft sehr viel Wärme nach außen, während die dafür eintretende Kaltluft die Raumtemperatur absenkt oder zumindest ein während des Lüftens verstärktes Heizen bedingt. Aus Gründen der Energieersparnis und auch der Behaglichkeit hat man deshalb in der eingangs geschilderten Weise diese Lüftungsvorrichtungen mit einem Wärmetauscher versehen, in welchem die in der Abluft enthaltene Wärme zumindest teilweise an die eintretende Zuluft abgegeben wird.

Durch die Unterteilung sowohl des Zuluft- als auch des Abluftstroms in eine möglichst große Anzahl von Teilströmen erhält man eine groß Wärmetauschfläche und damit einen hohen Wirkungsgrad des Wärmetauschers dieser Lüftungsvorrichtung. Um die durch die Aufspaltung der beiden Luftströme in Teilströme zwangsläufig reduzierte Strömungsgeschwindigkeit zu kompensieren, wird in bevorzugter Weise sowohl die Abluft als auch die Zuluft mit Hilfe eines Gebläses beschleunigt. Man erreicht damit bei verbesserter Energierückgewinnung eine gute Lüftung.

In bevorzugter Weise stattet man beide Gebläse mit veränderlicher Drehzahl aus, so daß man den Grad der Lüftung in Stufen oder noch besser stufenlos verändern kann. Durch die Anordnung der Zuströmöffnungen sowohl für die Zuluft- als auch die Abluft-Teilströme am einen Ende des Wärmetauschers und dementsprechend der Abströmöffnungen für die Zuluft- und Abluft-Teilströme am gegenüberliegenden Ende des Wärmetauschers erreicht man, in Längsrichtung der Lüftungsvorrichtung gesehen, besonders lange Strömungswege und damit eine Leistungsverbesserung. Die Höhe und Tiefe derartiger Lüftungsvorrichtungen sind meist vorgegeben, wodurch die Größe des Wärmetauschers in diesen beiden Dimensionsrichtungen nicht frei wählbar ist. Schon aus diesem Grunde ist man an möglichst langen Strömungswegen sehr interessiert. Deshalb führt man die beiden Luftströme über Kreuz.

Der Wärmetauscher der bekannten Lüftungsvorrichtung besteht aus parallelen Wärmetauscherplatten, die durch leistenförmige Verschlüsse auf Abstand gehalten werden. Die Verschlüsse erstrecken sich dabei jeweils über die halbe Plattenbreite, wobei über die Höhe des Plattenstapels gesehen abwechselnd die linken und rechten Ein- bzw. Austrittsschlitze je zur Hälfte verschlossen werden. Die leistenförmige Verschlüsse werden einzeln gefertigt und jede für sich zwischen benachbarte Platten eingesetzt. Dies führt zu einer aufwendigen und damit vergleichsweise teuren Fertigung. Eine seitliche Abdichtung erreicht man, in Längsrichtung des Wärmetauschers gesehen, durch eine linke und rechte Seitenplatte.

Es entsteht auf diese Weise zwar ein kompakter, als eine Einheit einsetz- und herausnehmbarer Wärmetauscher, jedoch wird es als nachteilig angesehen, daß er aufgrund der verbleibenden schmalen Schlitze am Zu- und Abströmende sowie der Seitenwände schlecht zu reinigen ist. Es kommt noch hinzu, daß die Verschluß-Leisten senkrecht zur Anströmrichtung stehen und dadurch einen hohen Widerstand verursachen. Außerdem ergeben sich aufgrund dieser senkrechten Anordnung zur Längsachse des Wärmetauschers bzw. zur Anströmrichtung des Luftstroms verhältnismäßig kleine Zu- und Abströmöffnungen in Verhältnis zur Breite des Strömungsraums zwischen zwei Platten. Des weiteren gibt es keine Abdichtung zwischen den Wärmetauscherseitenwänden und den dazu parallelen Gehäusewänden der Lüftungsvorrichtung, so daß zwischen den genannten Wänden unerwünschte Schleichwege für die Luft entstehen.

Die Aufgabe der Erfindung wird infolgedessen darin gesehen, die Lüftungsvorrichtung der eingangs beschriebenen Art so weiterzubilden, daß bei geringsmöglichem baulichem Aufwand die Strömungsverluste möglichst klein sind und das Reinigen problemlos durchgeführt werden kann.

Zur Lösung dieser Aufgabe wird erfindungsgemäß vorgeschlagen, daß die Lüftungsvorrichtung gemäß dem Oberbegriff des Anspruchs 1 entsprechend dem kennzeichnenden Teil dieses Anspruchs ausgebildet ist.

Durch die Verwendung zweier, die erwähnten « Verschlüsse » aufweisender Verteilerstücke läßt sich die Teilezahl dieses Wärmetauschers erheblich reduzieren und dadurch die Fertigung vereinfachen sowie verbilligen.

Die Winkelform der Verteilerstücke führt zu wesentlich größeren Zu- und Abströmöffnungen, so daß sich der Luftwiderstand beim Einströmen reduziert und das Verhältnis zur Breite des Wärmetauschers günstiger wird. Die zwischen übereinander angeordneten Öffnungen befindlichen Stege verlaufen jetzt nicht mehr senkrecht zur Anströmrichtung, sondern geneigt dazu, was zu einer weiteren Verbesserung der Gesamtströmungsverhältnisse führt.

Durch die Anbringung von Dichtplatten an der Gehäuse-Vorderwand einerseits und der dazu parallelen Gehäuse-Rückwand andererseits entfallen die Seitenwände am Wärmetauscher und dies verbessert die Zugänglichkeit zu den Zwischenräumen zwischen benachbarten Räumen ganz erheblich. Die Reinigung wird vereinfacht, beschleunigt und verbessert. Außerdem erreicht man durch die Verwendung von Dichtplatten anstelle einfacher Seitenwände eine gute seitliche Abdichtung, so daß die gesamten Luftströme ausschließlich durch den Wärmetauscher geführt und Schleichwege unterbunden werden.

Eine Weiterbildung der Erfindung ergibt sich aus Anspruch 2. Dabei bilden die Stege zugleich Distanz- und Verschlußelemente zwischen jeweils zwei benachbarten Platten. Jede einer Winkelecke zugeordnete vertikale Leiste stellt ebenso wie die kammartigen Leisten ein Verbindungs- und Distanzelement für die Stege dar, so daß insgesamt jeweils ein stabiles, winkelförmiges Verteilerstück entsteht, welches vorzugsweise einstückig aus Kunststoff gefertigt wird. Im übrigen schließt diese Konstruktion Fehlmontagen aus. Demgegenüber muß bei der vorbekannten Ausführung auf die richtige Montage jedes einzelnen Verschlußstücks geachtet werden.

Eine besonders vorteilhafte Ausgestaltung der Erfindung besteht darin, daß jeder vertikale Steg des Verteilerstücks nach außen übersteht und an einer Dichtfläche anliegt, die durch das innere Ende einer Dämmplatte des jeweils zugeordneten Teilstücks der gemeinsamen Längswand gebildet ist. Die Abnehmbare Montage des Wärmetauschers erfordert selbstverständlich auch eine gute Abdichtung in dem Bereich, wo die Zuström- bzw. Abströmöffnungen an den beiden Enden des Wärmetauschers benachbart sind und sich dort sehr nahe kommen. In geeigneter Weise läßt sich der Wärmetauscher an die inneren Dämmplattenenden so anpressen, daß die benachbarten Zuluft- und Abluftöffnungen einwandfrei gegeneinander abgedichtet sind.

Eine weitere Variante der Erfindung ist dadurch gekennzeichnet, daß die Zuströmöffnungen für die Zuluft und Abluft einerseits und die Abströmöffnungen für die Zuluft und Abluft andererseits jeweils einen spitzen, vorzugsweise etwa rechten Winkel miteinander einschließen. Der spitze, insbesondere rechte Winkel führt zu vergleichsweise breiten Luftdurchtrittsschlitzen im Verhältnis zur Breite des Wärmetauschers, so daß es im Innern des Wärmetauschers zu keinen nennenswerten Änderungen der Strömungsgeschwindigkeit aufgrund einer Veränderung des Strömungsquerschnitts kommt. Außerdem ist die Durchströmung auf der gesamten Breite des Wärmetauschers, insbesondere beim rechten Winkel, besonders gut gewährleistet.

Eine bevorzugte Ausführungsform der Erfindung kennzeichnet sich dadurch, daß die Platten steckbar in den Verteilerstücken gehalten sind und die Plattenaußenflächen bündig in die an ihrem inneren Ende absatzartig reduzierten Stege übergehen. Insbesondere bei Verwendung von Kunststoff für die Verteilerstücke kann man entsprechende Klemm- und Halteelemente für die Platten unmittelbar anformen bzw. anspritzen. Dabei bieten sich die kammartigen Leisten in den Endbereichen der Stege in besonderem Maße zur Anbringung von Zungen od. dgl. Halteelementen an. Im übrigen ermöglicht die steckbare Verbindung gegebenenfalls auch ein vollständiges Demontieren des Wärmetauschers für eine besonders gründliche Reinigung. Durch die absatzartige Reduzierung der Stege an ihrem inneren Ende erreicht man einen glatten Übergang und dadurch einen besonders geringen Strömungswiderstand in diesem Bereich.

Die Dichtplatten sind vorzugsweise zugleich als Schalldämmplatten der Lüftungsvorrichtung ausgebildet. Die Dichtplatten lassen sich demnach in doppelter Weise ausnutzen, nämlich zum Abdichten einerseits und zur Schalldämmung andererseits. In der Regel sind Schalldämmplatten auch wärmeisolierend, weswegen diese Eigenschaft ergänzend hinzutritt.

Eine weitere Ausbildung der Erfindung sieht vor, daß bei einer Lüftungsvorrichtung mit einem quaderförmigen Gehäuse mit jeweils einer Gruppe von Durchströmöffnungen für die Zu- und Abluft an den Endbereichen der Gehäuse-Vorderwand letztere als Deckel, insbesondere als Klappdeckel, ausgebildet ist und an der Deckelinnenseite zwischen den beiden Gruppen der Durchströmöffnungen die vordere Dichtplatte angebracht ist. Die Verwendung eines Deckels gewährleistet eine gute Zugänglichkeit zum Innern der Lüftungsvorrichtung, was der leichten Reinigung zugute kommt. Insbesondere ermöglicht ein großer Deckel das Herausnehmen des Wärmetauschers, weswegen man ihn zweckmäßigerweise abnehmbar montiert. Ein abnehmbarer Wärmetauscher ist nicht nur leichter zu reinigen als ein festmontierter, vielmehr gestattet er auch das Reinigen des Innern der Lüftungsvorrichtung. Die Anbringung der vorderen Dichtplatte am Deckel erleichtert das Herausnehmen des Wärmetauschers wesentlich.

Eine weitere Variante der Erfindung kennzeichnet sich dadurch, daß sich die der Gehäuserückwand zugeordnete Dichtplatte als Schalldämmplatte über zumindest nahezu die gesamte Gehäuserückwand erstreckt. Man verbessert dadurch die Schalldämmung nicht nur im Bereich des Wärmetauschers, sondern über die gesamte Länge der betreffenden Gehäuserückwand.

Eine andere bevorzugte Ausführungsform der Erfindung besteht darin, daß die beiden Teilstücke der gemeinsamen Längswand des Zu- und Abluftkanals beidseitig mit schallschluckendem Material belegt sind und ein Randbereich des Dämmaterials zugleich eine Dichtleiste mit der Dichtfläche für den zugeordneten vertikalen Steg bildet. Diese Längswand bildet zusammen mit der unteren und oberen Gehäusewand sowie der Vorder- bzw. Rückwand und den stirnseitigen Begrenzungswänden die außerhalb des Wärmetauschers gelegenen Strömungskanäle für die Zu- und die Abluft, also die Verbindung von den Durchströmöffnungen der Vorrichtung zu den Ein- bzw. Austrittsöffnungen des Wärmtauschers. Durch die Ausstattung der erwähnten Wände mit zumindest schalldämmendem Material hält man vom Rauminnern sowohl Außengeräusche als auch Lüftergeräusche fern.

Eine Weiterbildung der Erfindung ist dadurch gekennzeichnet, daß die Durchströmöffnungen zumindest am Gehäusedeckel mittels eines, insbesondere gemeinsammen, Schiebers abdeck- oder freigebbar sind. Dadurch dient zumindest der Deckel dieser Lüftungsvorrichtung als Schieberlüftung. Im Gegensatz zu herkömmlichen Schieberlüftungen befinden sich dabei jedoch nur an den äußeren Bereichen des Deckels verschließbare Lüftungsöffnungen. Über die eine Öffnungsgruppe tritt die Raumluft in die Lüftungsvorrichtung ein und über die andere Gruppe die vorgewärmte Frischluft aus. Der Lüftungsschieber kann sich aber in vorteilhafter Weise über die gesamte Länge des Deckels erstrecken, jedoch muß man dann die daran befindliche Dämmplatte so gestalten, daß sie die Schieberbewegung nicht behindert.

Der am Gehäusedeckel gelagerte Schieber ist in besonders vorteilhafter Weise mittels eines Antriebsmotors hin und her verschiebbar, wobei der Antrieb insbesondere über eine Exzenterzapfen-Schlitz-Vorrichtung erfolgt. Dies erhöht zweifellos den Bedienungskomfort, insbesondere, wenn die Lüftungsvorrichtung nicht ohne weiteres zugänglich ist.

Weitere vorteilhafte Ausgestaltungen ergeben sich aus der nachfolgenden Beschreibung einer bevorzugten Ausführung der Erfindung. Diese wird anhand der Zeichnung näher erläutert. Hierbei stellen dar :

Figur 1   perspektivisch eine Lüftungsvorrichtung,

Figur 2   dieselbe Lüftungsvorrichtung mit geöffnetem Klappdeckel,

Figur 3   eine der Fig. 2 entsprechende Darstellung mit herausgenommenem Wärmetauscher und, zur Erhöhung der Übersichtlichkeit, weggelassener oberer Gehäusewand,

Figur 4   perspektivisch und in vergrößertem Maßstab den Wärmetauscher,

Figur 5   dieselbe Darstellung des Wärmetauschers jedoch ohne die Wärmetauscherplatten.

Das Gehäuse 1 dieser Lüftungsvorrichtung besteht im wesentlichen aus der Rückwand 2, der Vorderwand 3, der Bodenplatte 4, der Deckplatte 5 sowie der linken Seitenplatte 6 und der rechten Seitenplatte 7. Außerdem ist noch eine sich in Längsrichtung erstreckende, etwa der Gehäusemitte zugeordnete unterbrochene Längswand vorgesehen, die aus den Teilstücken 8 und 9 besteht.

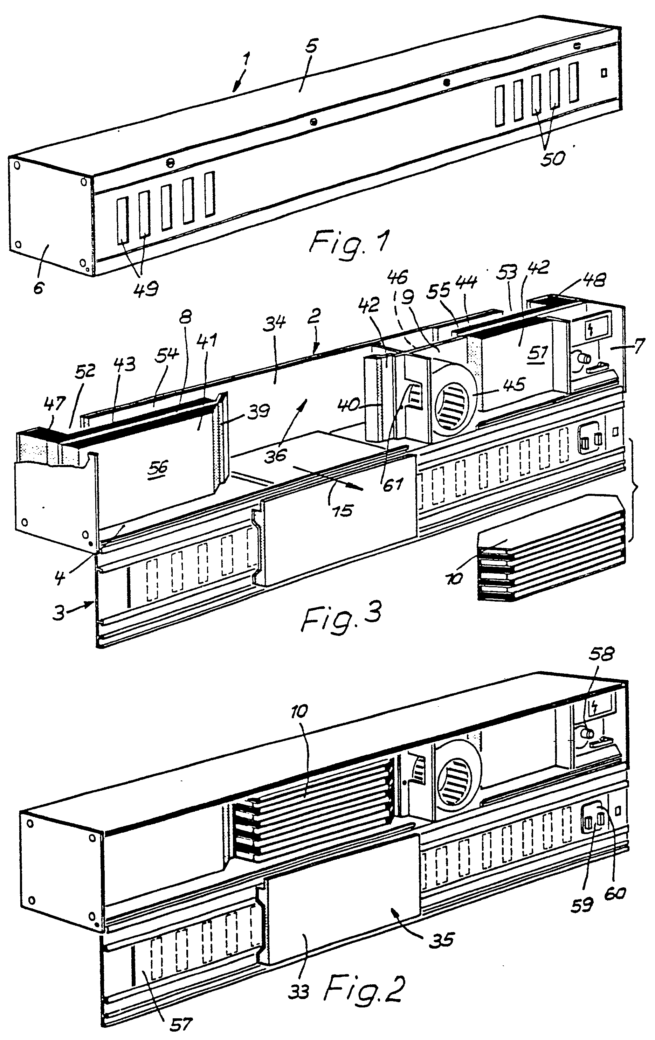

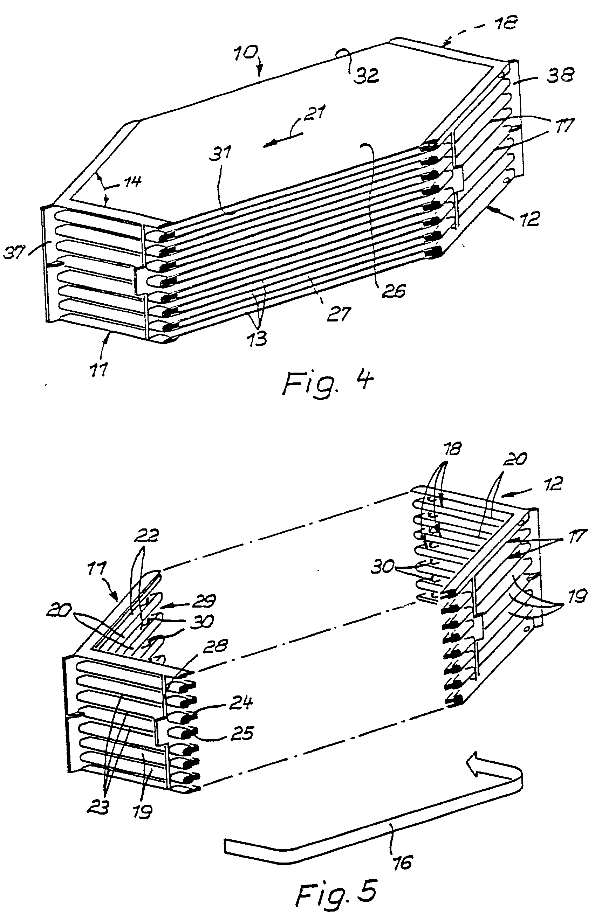

In die Lücke zwischen diesen beiden Teilstücken 8 und 9 ist der herausnehmbare Wärmetauscher 10 dichtend eingesetzt. Die Figuren 4 und 5 zeigen diesen Wärmetauscher im Detail. Er besteht im wesentlichen aus dem linken und rechten Verteilerstück 11 bzw. 12 und einer ganzen Anzahl in Fig. 4 übereinander angeordneter Platten 13, deren Form sich besonders deutlich aus dieser Figur ergibt. Sie setzt sich zusammen aus einem Rechteck und einem an die linke und rechte Schmalseite angesetzten Dreieck, dessen beide Längskanten vorzugsweise einen Winkel 14 von etwa 90° einschliessen. Sie bestehen aus einem Werkstoff mit guter Wärmeleitfähigkeit, beispielsweise aus Aluminium, während die Verteilerstücke beim Ausführungsbeispiel aus Kunststoff hergestellt sind. Der Pfeil 15 zeigt in Fig. 3 die Demontagerichtung für den Wärmetau scher 10. Eingesetzt wird er selbstverständlich in Gegenrichtung. Mit dem Pfeil 16 der Fig. 5 soll angedeutet werden, daß man den Wärmetauscher ohne Beeinträchtigung seiner Funktion auch in einer um 180° gedrehten Stellung wieder einsetzen kann. Insofern ist also das Herausnehmen und Reinigen des Wärmetauschers durch einen Laien mit keinem Problem für die Funktion verbunden. Dasselbe gilt auch, wenn man den Wärmetauscher nicht um 180° gedreht, sondern gewissermaßen auf den Kopf gestellt wieder einsetzt. All dies ist aufgrund der nachstehend beschriebenen vorteilhaften Ausgestaltung dieses Wärmetauschers möglich.

An dem in Figur 4 rechten Ende des Wärmetauschers 10 befinden sich die schlitzförmigen Zuströmöffnungen 17 für die Abluft und die gleichartigen Zuströmöffnungen 18 für die Zuluft. Diese schlitzartigen Zuströmöffnungen 17 bzw. 18 entstehen dadurch daß man die beiden rechtwinklig zueinander stehenden Flächen der Verteilerstücke 11 und 12 in einzelne Sprossen oder Zinken unterteilt hat, zwischen denen hindurch am rechten Verteilerstück 12 die Abluft und die Zuluft einströmen können, während sie am linken Verteilerstück 11 über diese schlitzförmigen Öffnungen ausströmt. Infolgedessen haben diese Verteilerstücke die Gestalt von zwei winklig aneinander angesetzten Kämmen oder Rechen. Dabei sind aber die Zinken der letzteren gemäß einer besonderen Ausgestaltung der Erfindung gegeneinander versetzt, d. h. ein Zinken 19 steht aufgrund der dem Zwischenraum entsprechenden Dicke jeweils auf Lücke zwischen zwei Zinken 20 und umgekehrt. Infolgedessen befindet sich jeweils zwischen zwei über die Zuströmöffnungen 17 eingetretenen Teilluftströmen der Abluft ein Teilluftstrom der Zuluft und umgekehrt. Anders ausgedrückt sind die Teilluftströme der Zuluft und der Abluft durch jeweils eine der Platten 13 voneinander getrennt. Da im Winter die Abluft wärmer ist als die Zuluft, erwärmen die Abluft-Teilströme die Platten 13, während die über- und unterhalb von jeweils zwei solchen Platten fließenden Zuluft-Teilströme sich an der Plattenoberfläche erwärmen, wodurch ein Wärmerückgewinn stattfindet und die Zuluft wärmer in den Raum eintritt, als sie in die Lüftungsvorrichtung gelangt ist.

Aus dem Vorstehenden ergibt sich, daß die Zuluft- und die Abluft-Teilströme den Wärmetauscher 10 im wesentlichen in Richtung 21, also in dessen Längsrichtung, durchströmen. Aufgrund der Anordnung der Abströmöffnungen 22 für die Abluft und der Abströmöffnungen 23 für die Zuluft ist eine unerhebliche Abweichung von der Parallelströmung zu verzeichnen. Die Zuströmöffnungen 17 und die Abströmöffnungen 22 für die Abluft liegen ebenso in etwa parallelen Ebenen zueinander wie die Zuströmöffnungen 18 und die Abströmöffnungen 23 für die Zuluft. Dieses Konstruktionsprinzip ermöglicht das Einsetzen dieses Wärmetauschers in jeder beliebigen Lage, d.h. oben und unten sowie links und rechts können beliebig vertauscht werden, ohne daß das Funktionsprinzip dieses Wärmetauschers und damit der gesamten Lüftungsvorrichtung in Frage gestellt ist.

Insbesondere aus Fig. 5 ersieht man, daß die Zinken 19 und 20 an ihrer Anströmseite abgerundet und damit strömungsgünstig geformt sind. An ihrer Abströmseite sind sie oben und unten durch einen Absatz 24 bzw. 25 in ihrer Dicke reduziert. Diese Absätze sind so dimensioniert, daß gemäß Fig. 4 die Oberseite 26 und die Unterseite 27 der jeweils angesetzten Platte 13 bündig mit dem dickeren Profilteil abschließt. Man vermeidet dadurch Strömungsverluste beim Ein- und Austritt des betreffenden Teilluftsstroms in den Wärmetauscher 10.

Zur Versteifung aber auch zur Bildung von Halteelementen für die Platten 13 sind die Endbereiche der Zinken 19 bzw. 20 über eine ebenfalls etwa kammförmige Leiste 28 bzw. 29 miteinander verbunden. Die Zähne dieser Kämme sind in Fig. 5 deutlich zu sehen und dort mit der Bezugszahl 30 versehen. Zwischen jeweils einem Zahn 30 und einem Zinken 19 oder 20 ist der zugeordnete Schrägrand einer Platte 13 eingesteckt.

Die zwischen den Verteilerstücken 11 und 12 gelegenen Plattenlängsränder 31 und 32 sind mittels je einer elastischen Dichtplatte 33 bzw. 34 überdeckt. Diese Dichtplatten bilden zugleich Schalldämmplatten 35 bzw. 36 der Lüftungsvorrichtung. Im Falle der Schalldämmplatte 36 wird nur ein Teilstück als Dichtplatte 34 ausgenutzt (Fig. 3). Sie ist, wie Fig. 3 zeigt, länger als der Wärmetauscher 10 und befindet sich an der Innenseite der Rückwand 2. Demgegenüber ist die Schalldämmplatte 35 mit der Dichtplatte 33 identisch und sie ist an der Innenseite der als Klappdeckel ausgebildeten Vorderwand 3 gehalten. Allein durch Schließen dieses Klappdeckels erreicht man ein dichtes Anliegen der Dichtplatten 33 und 34 an den Plattenlängsrändern 31 und 32.

Außerdem werden dadurch auch die Stege 37 bzw. 38 am Außenwinkel des Verteilerstücks 11 bzw. 12 an ihre Dichtfläche 39 bzw. 40 angedrückt. Diese Dichtflächen werden durch die inneren Enden weiterer Schalldämmplatten 41 und 42 gebildet. Letztere sind in Fig. 3 an der Vorderseite des Teilstücks 8 bzw. 9 der unterbrochenen Längswand angebracht, deren gegeneinanderweisende inneren Enden, wie diese Figur zeigt, nach hinten etwas abgewinkelt sind. An der rückwärtigen Fläche der Teilstücke 8 und 9 der unerbrochenen Längswand befinden sich weitere Schalldämmplatten 43 und 44. Die Schalldämmplatten 42 und 44 sind zweiteilig ausgebildet und zwischen ihren Teilstücken befindet sich das Abluftgebläse 45 und das durch das Teilstück 9 verdeckte Zuluftgebläse 46. Es handelt sich dabei um ein Doppelgebläse mit zwei Schaufelrädern. Gemäß Fig. 3 sind auch an der Innenfläche der Seitenplatten 6 und 7 Schalldämmplatten 47 bzw. 48 angebracht. Die Schalldämmung stellt lediglich eine vorteilhafte Weiterbildung der Lüftungsvorrichtung dar und das Dämmaterial kann, soweit es keine zusätzliche Funktion übernimmt, gegebenenfalls entfallen.

Die Gehäusevorderwand 3 bzw. der Klappdeckel besitzt an seinem linken und rechten Endbereich je eine Gruppe von Durchströmöffnungen 49 bzw. 50. Über die Durchströmöffnungen 50 tritt die Abluft in die Vorrichtung ein und sie gelangt zunächst in den Raum 51. Mit Hilfe des Abluftgebläses 45 wird sie von dort zu den Zuströmöffnungen 17 des Wärmetauschers transportiert. Analog zu den Durchströmöffnungen 49 und 50 befinden sich an den Endbereichen der Rückwand 2 jeweils eine oder mehrere Durchströmöffnungen 52 bzw. 53. Beim Ausführungsbeispiel ist jeweils nur eine solche Durchströmöffnung vorgesehen. Die über die Abströmöffnungen 22 des Wärmetauscher 10 ausgetretene Abluft, gelangt in den Raum 54 hinter dem Teilstück 8 der unterbrochenen Längswand und verläßt diesen Raum über die Durchströmöffnung 52, welche der Außenluft zugekehrt ist.

Analog dazu tritt die Außenluft über die Durchströmöffnung 53 in den Raum 55 ein, von wo aus sie das Zuluftgebläse 46 zu den Zuströmöffnungen 18 des Wärmetauschers 10 transportiert. Von den Abströmoffnungen 23 des Wärmetauschers fließt die nunmehr erwärmte Zuluft in den Raum 56, der dem Raum 54 gegenüberliegt. Über die Durchströmöffnungen 49 tritt diese erwärmte Außenluft in den zu belüftenden Raum ein. Die Austrittsöffnung des Abluftgebläses 45 ist mit 61 bezeichnet. Die Austrittsöffnung des Zuluftgebläses 46 ist in gleicher Weise gestaltet.

Die Durchströmöffnungen 49 und 50 sind in der von Schieberlüftung her bekannten Art gestaltet und auf gegenseitigen Abstand gesetzt. Infolgedessen kann man sie mittels eines Schiebers 57 verschließen oder freigeben. Zweckmäßigerweise findet ein durchlaufender Schieber Anwendung, weswegen die Dichtplatte 33 an ihrer Innenfläche in der aus Fig. 2 ersichtlichen Weise ausgenommen ist. Der Schieber wird vorzugsweise motorlich betätigt, wozu ein exzentrisch umlaufender Zapfen 58 dient. Er greift in einen sich parallel zur Längsachse der Schieberlüftungsöffnungen erstreckenden Schlitz 59 einer mit dem Schieber 57 verbundenen Kupplungsstück 60 ein.

## Patentansprüche

1. Lüftungsvorrichtung mit einem Zuluft- und einem Abluftkanal sowie einem dem Zuluft- und dem Abluftstrom ausgesetzten, zwischen zwei Teilstücke (8, 9) einer gemeinsamen Längswand des Zu- und Abluftkanals dichtend eingesetzten Wärmetauscher (10) und einem Gebläse (45, 46), wobei der Zuluft- und der Abluftstrom im Wärmetauscher in Teilströme unterteilt sind und jeweils ein Teilstrom der Zuluft von einem Teilstrom der Abluft durch eine wärmeleitende Platte (13) getrennt ist, wobei ferner die in Längsrichtung der gemeinsamen Längswand verlaufenden Längsränder (31, 32) der Platten (13) durch jeweils eine Platte (33, 34) überdeckt sind und am einen Ende des Wärmetauschers (10) die Zuströmöffnungen (18, 17) sowohl für die Zuluft- als auch die Abluftteilströme und am gegenüberliegenden Ende die Abströmöffnungen (23, 22) für die Zuluft- und Abluftteilströme gelegen und die Zu- und Abströmöffnungen (18, 23) der Zuluft einerseits sowie die Zu- und Abströmöffnungen (17, 22) der Abluft andererseits jeweils in etwa parallelen, durch die Platten (13) gebildeten Ebenen angeordnet sind, dadurch gekennzeichnet, daß der Wärmetauscher (10) zwei im wesentlichen winkelförmige Verteilerstücke (11, 12) aufweist, die auf die gegenüberliegenden, dreieckförmigen Enden der Platten (13) aufgesteckt sind, wobei beide Winkelschenkel jedes Verteilerstücks (11, 12) aus Luftdurchtrittsschlitze (17, 18; 22, 23) für die Teilströme bildenden, parallelen Stegen (19, 20) bestehen und die Stege des einen Winkelschenkels gegenüber denjenigen des anderen um Stegbreite versetzt sind, und daß jeder Steg den Spalt zwischen benachbarten Platten auf dessen ganzer Länge und Breite überdeckt, daß außerdem jedes Verteilerstück (11, 12) an seiner Außenecke eine vertikale, als Abdichtleiste dienende Leiste (37, 38) trägt und die den Plattenlängsrändern (31, 32) zugeordneten Platten als elastische, an einer Gehäuse-Vorderwand (3) einerseits und einer dazu parallelen Gehäuse-Rückwand (2) andererseits angebrachte Dichtplatten (33, 34) ausgebildet sind.

2. Lüftungsvorrichtung nach Anspruch 1, dadurch gekennzeichnet, daß die Stege (19, 20) an der Zuströmseite einerseits sowie an der Abströmseite andererseits mit jeweils einer der Winkelecke der Verteilerstücke (11, 12) zugeordneten vertikalen Leiste (37, 38) und den Endbereichen der Stege (19, 20) jeweils zugeordneten kammartigen Leisten (28 bzw. 29) je ein Verteilerstück (11, 12) bilden.

3. Lüftungsvorrichtung nach Anspruch 2, dadurch gekennzeichnet, daß jeder vertikale Steg (37, 38) des Verteilerstücks (11, 12) nach außen übersteht und an einer Dichtfläche (39, 40) anliegt, die durch das innere Ende einer Dämmplatte (41, 42) des jeweils zugeordneten Teilstücks (8, 9) der gemeinsamen Längswand gebildet ist.

4. Lüftungsvorrichtung nach einem der vorhergehenden Ansprüche, dadurch gekennzeichnet, daß die Zuströmöffnungen (17, 18) für die Zuluft und Abluft einerseits und die Abströmöffnungen (22, 23) für die Zuluft und Abluft andererseits jeweils einen spitzen, vorzugsweise etwa rechten Winkel (14) miteinander einschließen.

5. Lüftungsvorrichtung nach einem der vorhergehenden Ansprüche, dadurch gekennzeichnet, daß die Platten (13) steckbar in den Verteilerstücken (11, 12) gehalten sind und die Plattenaußenflächen bündig in die an ihrem inneren Ende absatzartig reduzierten Stege (19, 20) übergehen.

6. Lüftungsvorrichtung nach einem der vorhergehenden Ansprüche, dadurch gekennzeichnet, daß die Dichtplatten (33, 34) zugleich als Schalldämmplatten (35, 36) der Lüftungsvorrichtung ausgebildet sind.

7. Lüftungsvorrichtung mit einem quaderförmigen Gehäuse (1) mit jeweils einer Gruppe von Durchströmöffnungen (49, 50) für die Zu- und Abluft an den Endbereichen der Gehäuse-Vorderwand (3) nach Anspruch 6, dadurch gekennzeichnet, daß die Gehäuse-Vorderwand als Deckel, insbesondere Klappdeckel, ausgebildet ist und an der Deckelinnenseite zwischen den beiden Gruppen der Durchströmöffnungen (49, 50) die vordere Dichtplatte (33) angebracht ist.

8. Lüftungsvorrichtung nach Anspruch 7, dadurch gekennzeichnet, daß sich die der Gehäuserückwand (2) zugeordnete Dichtplatte (34) als Schalldämmplatte (36) über zumindest nahezu die gesamte Gehäuserückwand erstreckt.

9. Lüftungsvorrichtung nach einem der Ansprüche 3 bis 8, dadurch gekennzeichnet, daß die beiden Teilstücke (8, 9) der gemeinsamen Längswand des Zu- und Abluftkanals beidseitig mit schallschluckendem Material (41, 42; 43, 44) belegt sind und ein Randbereich des Dämmaterials zugleich eine Dichtleiste mit der Dichtfläche (39, bzw. 40) bildet.

10. Lüftungsvorrichtung nach einem der Ansprüche 7 bis 9, dadurch gekennzeichnet, daß die Durchströmöffnungen (49, 50) zumindest am Gehäusedeckel (3) mittels eines insbesondere gemeinsamen Schiebers (57) abdeck- oder freigebbar sind.

11. Lüftungsvorrichtung nach Anspruch 10, dadurch gekennzeichnet, daß der am Gehäusedeckel (3) gelagerte Schieber (57) mittels eines Antriebsmotors hin und her verschiebbar ist, wobei der Antrieb insbesondere über eine Exzenterzapfen-Schlitz-Vorrichtung (58, 59) erfolgt.

## Claims

1. Ventilating device comprising an air inflow channel and an air outflow channel, a heat exchanger (10) exposed to the inflowing and the outflowing air stream and sealingly inserted between two parts (8, 9) of a common longitudinal wall of the inflow channel and the outflow channel, and a blower (45, 46), in which the inflow and the outflow air stream are subdivided into partial streams in the heat exchanger and each partial stream of inflowing air is separated from a partial stream of outflowing air by a thermally conductive plate (13), the longitudinal edges of which plates (13) extending in the longitudinal direction of the common longitudinal wall are each covered by a plate (33, 34), and the inlet openings (18, 17) both for the inflowing and for the outflowing partial air streams are situated at one end of the heat exchanger (10) and the outlet openings (23, 22) both for the inflowing and for the outflowing partial streams are situated at the opposite end and the inlet and outlet openings (18, 23) for the inflowing air on the one hand and the inlet and outlet openings (17, 23) for the outflowing air on the other hand are arranged in substantially parallel planes formed by the plates (13), characterised in that the heat exchanger (10) has two substantially angular distributor members (11, 12) mounted on the opposite triangular ends of the plates (13), both arms of each angular distributor member (11, 12) consisting of parallel webs (19, 20) which form air slots (17, 18; 22, 23) for the passage of the partial air streams and the webs of one arm of the angular construction being offset in relation to those of the other by the width of one web, and in that each web covers the gap between adjacent plates over the whole length and width of the latter, and in that, furthermore, each distributor member (11, 12) carries at its outer corner a vertical strip (37, 38) serving as sealing strip and the plates which are associated with the longitudinal edges (31, 32) of the plates serve as elastic sealing plates (33, 34) attached respectively to the front wall (3) of the housing and to a parallel rear wall (2) of the housing.

2. Ventilating device according to claim 1, characterised in that the webs (19, 20) both at the inflow end and at the outflow end cooperate in each case with a strip (37, 38) associated with the corner of the angle of the respective distributor member (11, 12) and with the comb-like bars (28 and 29 resp.) associated with the end regions of the webs (19, 20) to form a distributor member (11, 12).

3. Ventilating device according to claim 2, characterised in that each vertical web (37, 38) of the distributor member (11, 12) projects outwards and lies in contact with a sealing surface (39, 40) which is formed by the inner end of an insulating plate (41, 42) of the associated part (8, 9) of the common longitudinal wall.

4. Ventilating device according to one of the preceding claims, characterised in that the inlet openings (17, 18) for the inflowing and the outflowing air and the outlet openings (22, 23) for the inflowing and outflowing air in each case enclose an acute, preferably approximately right angle (14).

5. Ventilating device according to one of the preceding claims, characterised in that the plates (13) can be pushed into position and thereby held in the distributor members (11, 12) and the external surface of the plates are flush with the webs (19, 20) which are reduced by steps at their inner ends.

6. Ventilating device according to one of the preceding claims, characterised in that the sealing plates (33, 34) are constructed as sound insulating plates (35, 36) of the ventilating device.

7. Ventilating device comprising a rectangular housing (1) having a group of throughflow openings (49, 50) for the inflowing air and for the outflowing air, respectively, at the end regions of the front wall (3) of the housing according to claim 6, characterised in that the front wall of the housing is formed by a lid, in particular a hinged lid, and that the front sealing plate (33) is arranged on the internal surface of the lid, between the two groups of throughflow openings (49, 50).

8. Ventilating device according to claim 7, characterised in that the sealing plates (34) associated with the rear wall (2) of the housing extends as sound insulating plate (36) over at least almost the whole rear wall of the housing.

9. Ventilating device according to one of the claims 3 to 8, characterised in that the two parts (8, 9) of the common longitudinal wall of the inflow and the outflow air channel are covered on both sides with sound absorbent material (41, 42; 43, 44) and one edge region of the insulating material forms a sealing strip together with the sealing surface (39 and 40 resp.).

10. Ventilating device according to one of the claims 7 to 9, characterised in that the throughflow openings (49, 50) of at least one housing lid (3) can be closed and opened by means of a slide (57), in particular a common slide.

11. Ventilating device according to claim 10, characterised in that the slide (57) mounted on the housing lid (3) can be moved backwards and forwards by means of a drive motor, the drive being effected in particular by an eccentric pin and slot arrangement (58, 59).

**Revendications**

1. Dispositif de ventilation comprenant des canaux d'arrivée et de sortie d'air, un échangeur de chaleur (10) qui est exposé aux courants d'air d'arrivée et de sortie et est incorporé, de manière étanche, entre deux zones partielles (8, 9) d'une paroi longitudinale commune des canaux d'arrivée et de sortie d'air, ainsi qu'une soufflerie (45, 46), les courants d'air d'arrivée et de sortie étant scindés en des courants partiels dans l'échangeur de chaleur, et un courant partiel de l'air d'arrivée étant respectivement séparé d'un courant partiel de l'air de sortie par l'intermédiaire d'une plaque thermoconductrice (13), les bords longitudinaux (31, 32) desdites plaques (13), qui s'étendent dans le sens longitudinal de la paroi longitudinale commune, étant, par ailleurs, recouverts par un panneau respectif (33, 34), les ouvertures d'afflux (18, 17) tant des courants d'air partiels d'arrivée que de sortie étant situées à l'une des extrémités de l'échangeur de chaleur (10), et les ouvertures de sortie (23, 22) des courants d'air partiels d'arrivée et de sortie étant situées à l'extrémité opposée, et, d'une part, les ouvertures d'afflux et de sortie (18, 23) de l'air d'arrivée, ainsi que, d'autre part, les ouvertures d'afflux et de sortie (17, 22) de l'air de sortie, étant respectivement situées dans des plans sensiblement parallèles formés par les plaques (13), caractérisé par le fait que l'échangeur de chaleur (10) comprend deux pièces répartitrices (11, 12) sensiblement configurées en cornières qui sont emboîtées sur les extrémités triangulaires opposées des plaques (13), les deux branches de la cornière de chaque pièce répartitrice (11, 12) consistant en des membrures parallèles (19, 20) qui forment des fentes (17, 18 ; 22, 23) de passage d'air pour les courants partiels, et les membrures de l'une des branches de la cornière étant décalées d'une largeur de membrure par rapport à celles de l'autre branche ; par le fait que chaque membrure comble l'interstice entre des plaques voisines, sur toute la longueur et la largeur de ce dernier ; et par le fait que chaque pièce répartitrice (11, 12) porte, en outre, sur son coin extérieur, un bandeau vertical (37, 38) servant de bandeau d'étanchement, et les panneaux associés aux bords longitudinaux (31, 32) des plaques sont réalisés sous la forme de panneaux élastiques d'étanchement (33, 34) installés, d'une part, sur une paroi antérieure (3) du boîtier et, d'autre part, sur une paroi postérieure (2) de ce boîtier, parallèle à la paroi précitée.

2. Dispositif de ventilation selon la revendication 1, caractérisé par le fait que, tant d'une part du côté afflux que d'autre part du côté sortie, les membrures (19, 20) forment une pièce répartitrice respective (11, 12), à chaque fois avec un bandeau vertical (37, 38) associé au coin de la cornière des pièces répartitrices (11, 12) et avec des barrettes (28, respectivement 29) en forme de peignes, respectivement associées aux régions extrêmes des membrures (19, 20).

3. Dispositif de ventilation selon la revendication 2, caractérisé par le fait que chaque bandeau vertical (37, 38) de la pièce répartitrice (11, 12) dépasse vers l'extérieur, et est appliqué contre une surface d'étanchement (39, 40) qui est formée par l'extrémité interne d'un panneau isolant (41, 42) de la zone partielle (8, 9) respectivement associée à la paroi longitudinale commune.

4. Dispositif de ventilation selon l'une des revendications précédentes, caractérisé par le fait que, d'une part, les ouvertures d'afflux (17, 18) de l'air d'arrivée et de l'air de sortie et, d'autre part, les ouvertures de sortie (22, 23) de l'air d'arrivée et de l'air de sortie, forment à chaque fois les unes avec les autres un angle aigu, de préférence un angle approximativement droit (14).

5. Dispositif de ventilation selon l'une des revendications précédentes, caractérisé par le fait que les plaques (13) sont retenues dans les pièces répartitrices (11, 12) avec faculté d'emboîtement, et les surfaces extérieures de ces plaques se confondent, en affleurement, dans les membrures (19, 20) décroissant de section à leur extrémité intérieure, à la manière de gradins.

6. Dispositif de ventilation selon l'une des revendications précédentes, caractérisé par le fait que les panneaux d'étanchement (33, 34) sont simultanément réalisés en tant que panneaux d'isolation phonique (35, 36) du dispositif de ventilation.

7. Dispositif de ventilation muni d'un boîtier rectangulaire (1) présentant, dans les régions extrêmes de sa paroi antérieure (3), un groupe respectif d'orifices (49, 50) de passage de l'air d'arrivée et de l'air de sortie, selon la revendication 6, caractérisé par le fait que la paroi antérieure du boîtier est réalisée sous la forme d'un couvercle, en particulier d'un couvercle rabattable, le panneau antérieur d'étanchement (33) étant installé à la face interne du couvercle, entre les deux groupes d'orifices de passage (49, 50).

8. Dispositif de ventilation selon la revendication 7, caractérisé par le fait que le panneau d'étanchement (34) associé à la paroi postérieure (2) du boîtier s'étend, en tant que panneau d'isolation phonique (36), sur au moins approximativement toute cette paroi postérieure du boîtier.

9. Dispositif de ventilation selon l'une des revendications 3 à 8, caractérisé par le fait que les deux zones partielles (8, 9) de la paroi longitudinale commune des canaux d'arrivée et de sortie d'air sont garnies, de part et d'autre, d'un matériau (41, 42 ; 43, 44) absorbant les bruits, et une région marginale de ce matériau isolant forme simultanément un bandeau d'étanchement présentant la surface d'étanchement (39, respectivement 40).

10. Dispositif de ventilation selon l'une des revendications 7 à 9, caractérisé par le fait que les orifices de passage (49, 50) peuvent être obturés ou dégagés, au moins sur le couvercle (3) du boîtier, au moyen d'une glissière (57) notamment commune.

11. Dispositif de ventilation selon la revendication 10, caractérisé par le fait que la glissière (57) montée sur le couvercle (3) du boîtier peut être animée d'un coulissement alternatif au moyen d'un moteur d'entraînement, l'entraînement étant en particulier assuré par l'intermédiaire d'un système à fente et à tourillon excentrique (58, 59).

Fig. 1

Fig. 3

Fig. 2

Fig. 4

Fig. 5